# EUROPEAN PATENT SPECIFICATION

(11) **EP 4 400 339 B1**
(45) Date of publication and mention of the grant of the patent: **02.12.2026**
(21) Application number: 23212283.8
(22) Date of filing: 27.11.2023
(51) Int. Cl.: B60G 3/20, B60G 7/00

(54) **VEHICLE HAVING A REAR SUSPENSION STRUCTURE**
HINTERRADAUFHÄNGUNGSSTRUKTUR FÜR EIN FAHRZEUG
STRUCTURE DE SUSPENSION ARRIÈRE POUR VÉHICULE

(30) Priority: 10.01.2023 JP 2023001778
(43) Date of publication of application: 17.07.2024
(73) Proprietor: Suzuki Motor Corporation, Hamamatsu-shi, Shizuoka 432-8611 (JP)
(72) Inventor: YUASA, Koji, HAMAMATSU-SHI, 432-8611 (JP); MORIMOTO, Daiki, HAMAMATSU-SHI, 432-8611 (JP)
(74) Representative: Plasseraud IP

(56) References cited:
- EP-A1- 0 242 883
- GB-A- 2 287 918
- US-A- 5 992 868

## Description

### [Technical Field]

The present invention relates to a vehicle having a rear suspension structure.

### [Background Art]

A suspension structure disclosed in Patent Document 1 is known as an example of a rear suspension structure for a vehicle, which is used as a suspension structure for rear wheels in a four-wheel vehicle. The suspension structure disclosed in Patent Literature 1 includes: an axle member (also referred to as knuckle) that rotatably supports a rear wheel; two upper arms serving as connecting elements between an upper portion of the axle member and a vehicle body; two lower arms that connect a lower portion of the axle member and the vehicle body, below the two upper arms; and a toe control arm (also referred to as toe control link) that controls a toe angle of the rear wheel. In addition, a lower end of a coil spring is connected to the front lower arm of the two lower arms, and an upper end of the coil spring is connected to the vehicle body. In this way, in the suspension structure of Patent Literature 1, a plurality of arms extends inward from the axle member (knuckle).

### [Citation List]

### [Patent Literature]

[Patent Literature 1] JP 2007-168517 A

### [Summary of Invention]

### [Problem to be Solved by the Invention]

Incidentally, a suspension structure for a rear wheel, in which a plurality of arms extends from a knuckle, can also be applied to a small vehicle in which a wheel size of the rear wheel is small. However, in the suspension structure described in Patent Literature 1, a joint portion in a knuckle side of each arm including a toe control arm is arranged in the wheel of the rear wheel, and accordingly, there is a problem in that there is a case in which it is difficult to apply the structure around the knuckle described in Patent Literature 1 to a small vehicle of which the wheel size is small.
GB 2 287 918 discloses a vehicle suspension which has a front lateral link provided under a trailing link and a shock absorber provided at the front lateral link._US 5992 868 discloses a double wishbone type wheel suspension system comprising an upper A-arm, a lower A-arm and a toe control link provided between the vehicle body and a forward part of a knuckle. EP 0 242 883 discloses a vehicle rear suspension system including a wheel hub, a front lateral link connected through a front inner rubber bush with the vehicle body and through a front outer rubber bush with the wheel hub.

In view of the above problem, an object of the present invention is to provide a vehicule having a rear suspension structure, which can increase a flexibility in choosing in a wheel size of the rear wheel of an object to be supported.

### [Means for Solving the Problems]

A vehicule having a rear suspension structure for achieving the above object according to the present invention which includes the feature of claim 1.

### [Advantageous Effects of Invention]

According to the present invention, a vehicle having a rear suspension structure can be provided which can increase the flexibility in choosing in a wheel size of a rear wheel of an object to be supported.

### [Brief Description of Drawings]

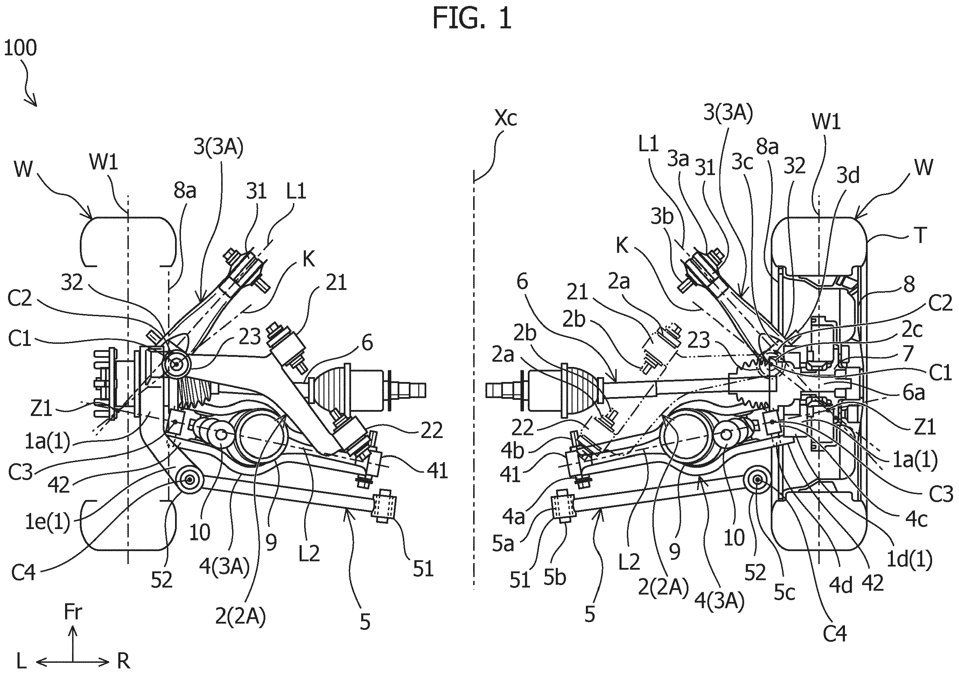

[Figure 1] Figure 1 is a view of a rear suspension structure of a vehicle according to an embodiment of the present invention, when viewed from above the vehicle; and a left half is a top plan view and most of a right side including a rear wheel is a horizontal cross-sectional view passing through a center of a radial direction of the rear wheel.

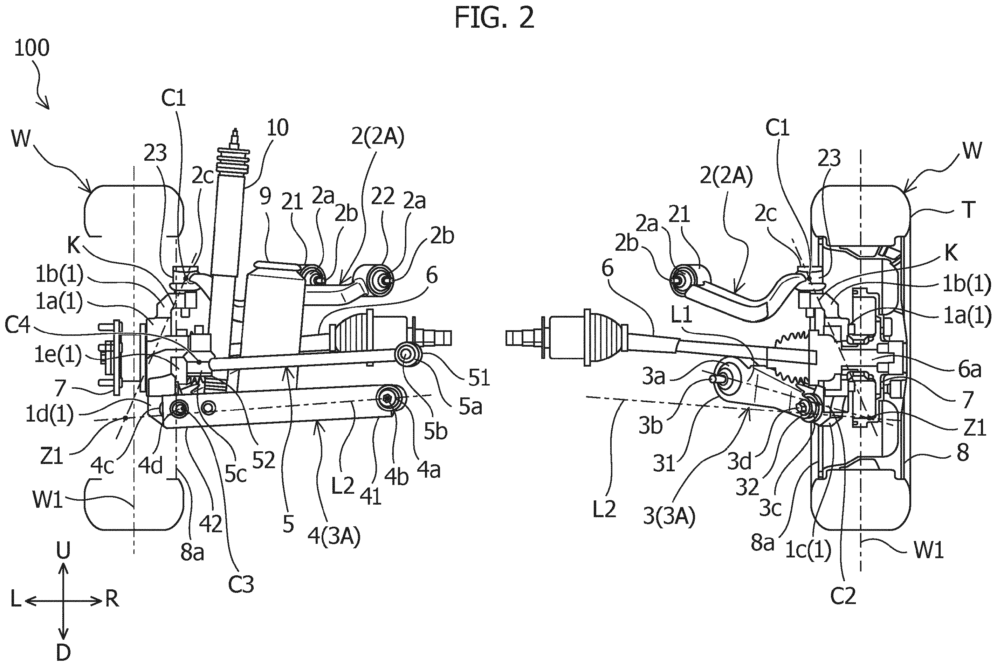

[Figure 2] Figure 2 is a view of the rear suspension structure of a vehicle, when viewed from a rear side of the vehicle, and in which a left half is a rear view and most of a right side including the rear wheel is a vertical cross-sectional view passing through the center of the radial direction of the rear wheel.

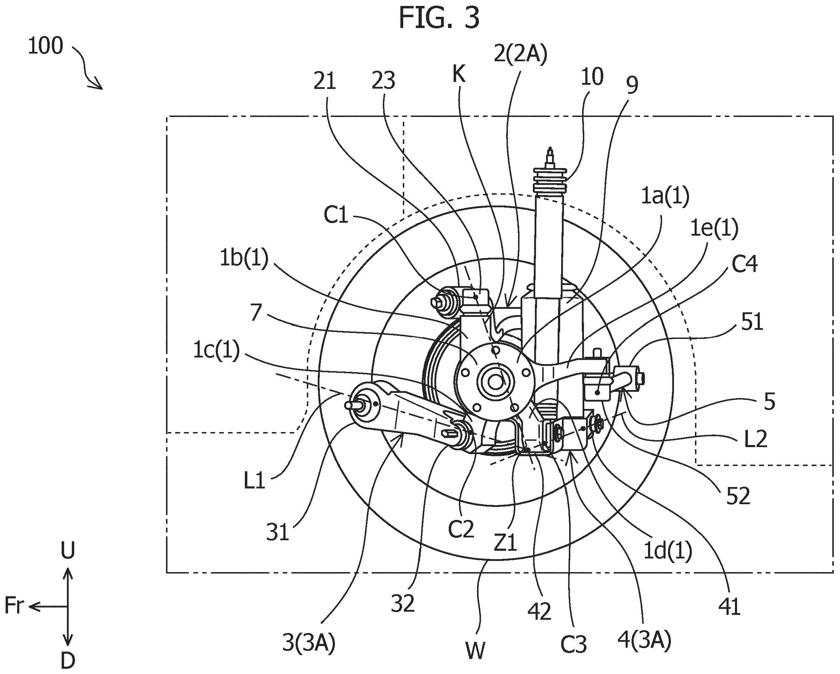

[Figure 3] Figure 3 is a side view of the rear suspension structure of a vehicle, when viewed from an outer side of a vehicle width direction.

### [Mode for Carrying Out the Invention]

Embodiments according to the present invention will be described below with reference to the accompanying drawings.

Figure 1 is a view of a vehicle having a rear suspension structure according to an embodiment of the present invention, when viewed from above the vehicle, and Figure 2 is a view of the rear suspension structure of the vehicle, when viewed from the rear side of the vehicle. The left half of Figure 1 is a top plan view, and most of the right side including the rear wheel of Figure 1 is a horizontal cross-sectional view which passes through the center of the rear wheel of the vehicle in a radial direction; and the left half of Figure 2 is a rear view, and most of the right side including the rear wheel of Figure 2 is a vertical cross-sectional view passing through the center of the rear wheel in the radial direction. Note that, in Figure 1 and Figure 2, the inner structure of the rear wheel is partially omitted in the left half.

In addition, in the drawings, an arrow Fr indicates a front side in a vehicle-front-rear direction, and an arrow R and an arrow L indicate a right side and a left side in a vehicle width direction when an occupant looks at a front side of the vehicle. In addition, an arrow U indicates an upper side in a vehicle-up-down direction, and the arrow D indicates the lower side in the vehicle-up-down direction. In addition, "front" and "rear" in the embodiment correspond to the front and rear with respect to a vehicle-front-rear direction.

A rear suspension structure of a vehicle 100 according to the present embodiment is an independent suspension multi-link type of rear suspension structure for rear wheels W of a four-wheel vehicle. In the present embodiment, the rear suspension structure of the vehicle 100 shall be applied to a rear suspension structure of a vehicle in which at least the rear wheel W is motor-driven. The rear suspension structure of the vehicle 100 shall be applied as a rear suspension structure for each of left and right rear wheels W; and the left rear suspension structure and the right rear suspension structure have the same structure (shape) except in the point that both structures are formed mutually symmetrically with respect to the vehicle width direction (left-right direction).

Referring to Figure 1 and Figure 2, the rear suspension structure of the vehicle 100 includes a knuckle 1, an upper link 2A, a lower link 3A having a front lower arm 3 and a rear lower arm 4, and a toe control arm 5. In the following, any one of the left rear suspension structure and the right rear suspension structure in the rear suspension structure of the vehicle 100 will be described, but the following configuration also applies to the other structure.

In the present embodiment, the upper link 2A is formed of one (single) upper arm 2. Accordingly, the rear suspension structure of the vehicle 100 is a four-link multi-link type of rear suspension structure having four link arms (2, 3, 4 and 5) for one rear wheel W.

The knuckle 1 is a member that rotatably supports the rear wheel W of the vehicle. The knuckle 1 is connected to a vehicle body (not shown) of the vehicle via the four link arms (2, 3, 4 and 5). The vehicle body that is an object to be connected is a portion constituting a bottom portion among structural members of the vehicle (in other words, bottom portion of vehicle body).

The rear wheel W that is an object to be supported by the knuckle 1 includes: a hub 7 that is fastened to one end portion 6a on a rear wheel side of a drive shaft 6 for driving the rear wheel W; a wheel 8 that is fixed (fastened) to the hub 7; and a tire T that is attached to the wheel 8. The knuckle 1 is connected to the vehicle body via the upper link 2A, the lower link 3A and the toe control arm 5, so as to be movable mainly in the up-down direction in association with the extension and retraction of the suspension (suspension stroke). An electric motor (not shown) is connected to the other end portion (inner end portion in vehicle width direction) of the drive shaft 6; and a driving force from the electric motor is transmitted to the rear wheel W via the drive shaft 6 and the hub 7.

The knuckle 1 includes a hub support portion 1a, and four knuckle arms (1b, 1c, 1d and 1e). The hub support portion 1a is a portion that rotatably supports the hub 7 which is fastened to the one end portion 6a of the drive shaft 6. Specifically, the hub support portion 1a is configured to rotatably support the one end portion 6a of the drive shaft 6 and the hub 7. The hub support portion 1a is formed integrally with the knuckle arm (1b, 1c, 1d and 1e). Each knuckle arm (1b, 1c, 1d and 1e) will be described in detail later.

The upper link 2A is a member that connects an upper portion of the knuckle 1 with the vehicle body of the vehicle. In the present embodiment, the upper link 2A is formed of one upper arm 2, as previously described. In addition, a connecting portion of the upper link 2A (upper arm 2) with the vehicle body is branched into two. In other words, the upper arm 2 is a single so-called upper A arm in which a portion in the vehicle body side is divided into two.

The upper arm 2 is positioned at an upper side than the drive shaft 6 in the vehicle-up-down direction. Most of the upper arm 2 except for a portion on the vehicle body side extends substantially in the vehicle width direction. In addition, the upper arm 2 includes a front upper inner connecting portion 21 and a rear upper inner connecting portion 22 that is positioned rearward of the front upper inner connecting portion 21 in the vehicle-front-rear direction, as connecting portions with the vehicle body (vehicle body connecting portions). The upper arm 2 has an upper outer connecting portion 23 which is a connecting portion with the knuckle 1 (knuckle connecting portion).

An upper inner bush 2a that is a rubber bush formed into a substantially cylindrical shape is held by each of the front upper inner connecting portion 21 and the rear upper inner connecting portion 22. In addition, an upper inner swing shaft 2b is inserted through each upper inner bush 2a. The upper inner swing shaft 2b extends along a cylindrical central axis of the upper inner bush 2a, and is held by the upper inner bush 2a. In addition, the front upper inner connecting portion 21 and the rear upper inner connecting portion 22 are connected to the vehicle body via the upper inner bush 2a and the upper inner swing shaft 2b, so as to be swingable substantially with the upper inner swing shaft 2b as the center of the swing.

The upper outer connecting portion 23 is connected to an upper portion of the knuckle 1 via an upper outer joint 2c which is a ball joint. In addition, the upper outer connecting portion 23 is connected to the knuckle 1, so as to be swingable while regarding the ball center of the upper outer joint 2c as the center of the swing.

The lower link 3A is a member that connects a lower portion of the knuckle 1 with the vehicle body, below the upper link 2A. As previously described, the lower link 3A is formed of the front lower arm 3 and a rear lower arm 4. In other words, the lower link 3A is formed of two so-called lower A arms.

The lower link 3A is also a member that holds the lower end portion of a coil spring 9. Furthermore, the lower link 3A is also a member that holds a lower end portion of a shock absorber 10. In the present embodiment, the lower end portion of the coil spring 9 and the lower end portion of the shock absorber 10 are supported by the rear lower arm 4 of the lower link 3A. Specifically, the lower end portion of the coil spring 9 is supported by a spring seat portion that is formed in a middle in the longitudinal direction of the rear lower arm 4. The lower end portion of the shock absorber 10 is supported by an absorber seat portion that is formed in a portion of the rear lower arm 4 which is positioned outward in the vehicle width direction with respect to the spring seat portion. In addition, an upper end portion of the coil spring 9 and an upper end portion of the shock absorber 10 are connected to the vehicle body.

The front lower arm 3 extends so as to depart from the drive shaft 6 as it heads to the inside in the vehicle width direction, in a further front side of the vehicle than the axial line of the drive shaft 6, in plan view viewed from above the vehicle. The front lower arm 3 includes: a front lower inner connecting portion 31 which is a connecting portion with the vehicle body (vehicle body connecting portion); and a front lower outer connecting portion 32 (knuckle connecting portion), which is a connecting portion with the knuckle 1.

A front lower inner bush 3a which is a rubber bush formed into a substantially cylindrical shape is held by the front lower inner connecting portion 31. In addition, a front lower inner swing shaft 3b is inserted through the front lower inner bush 3a. The front lower inner swing shaft 3b extends along a cylindrical central axis of the front lower inner bush 3a, and is supported by the vehicle body in a state of being inserted into the front lower inner bush 3a. In addition, the front lower inner connecting portion 31 is connected to the vehicle body via the front lower inner bush 3a and the front lower inner swing shaft 3b, so as to be swingable substantially with the front lower inner swing shaft 3b as the center of the swing.

A front lower outer bush 3c which is a rubber bush formed into a substantially cylindrical shape is held by the front lower outer connecting portion 32. In addition, a front lower outer swing shaft 3d is inserted through the front lower outer bush 3c. The front lower outer swing shaft 3d extends along a cylindrical central axis of the front lower outer bush 3c, and is supported by the knuckle 1 in a state of being inserted into the front lower outer bush 3c. In addition, the front lower outer connecting portion 32 is connected to a front side part of the lower portion of the knuckle 1 via the front lower outer bush 3c and the front lower outer swing shaft 3d, so as to be swingable substantially with the front lower outer swing shaft 3d as the center of the swing.

The rear lower arm 4 is arranged rearward of the front lower arm 3 in the vehicle-front-rear direction. The rear lower arm 4 extends so as to depart from the drive shaft 6 as it heads to the inside in the vehicle width direction, at a further rear side of the vehicle than the axial line of the drive shaft 6, in plan view viewed from above the vehicle. The drive shaft 6 is positioned between the front lower arm 3 and the rear lower arm 4, in plan view viewed from above the vehicle. In addition, the rear lower arm 4 includes: a rear lower inner connecting portion 41 which is a connecting portion with the vehicle body (vehicle body connecting portion); and a rear lower outer connecting portion 42 which is a connecting portion with the knuckle 1 (knuckle connecting portion).

A rear lower inner bush 4a which is a rubber bush formed into a substantially cylindrical shape is held by the rear lower inner connecting portion 41. In addition, a rear lower inner swing shaft 4b is inserted through the rear lower inner bush 4a. The rear lower inner swing shaft 4b extends along a cylindrical central axis of the rear lower inner bush 4a and is supported by the vehicle body in a state of being inserted into the rear lower inner bush 4a. In addition, the rear lower inner connecting portion 41 is connected to the vehicle body via the rear lower inner bush 4a and the rear lower inner swing shaft 4b, so as to be swingable substantially with the rear lower inner swing shaft 4b as the center of the swing.

A rear lower outer bush 4c which is a rubber bush formed into a substantially cylindrical shape is held by the rear lower outer connecting portion 42. In addition, a rear lower outer swing shaft 4d is inserted through the rear lower outer bush 4c. The rear lower outer swing shaft 4d extends along a cylindrical central axis of the rear lower outer bush 4c, and is held by the knuckle 1 in a state of being inserted into the rear lower outer bush 4c. In addition, the rear lower outer connecting portion 42 is connected to a rear side part of the lower portion of the knuckle 1 via the rear lower outer bush 4c and the rear lower outer swing shaft 4d, so as to be swingable substantially with the rear lower outer swing shaft 4d as the center of the swing.

The toe control arm 5 is an arm that connects the knuckle 1 with the vehicle body and controls a change in a toe angle of the rear wheel W. The toe control arm 5 includes: a toe control inner connecting portion 51 which is a connecting portion with the vehicle body (vehicle body connecting portion); and a toe control outer connecting portion 52 which is a connecting portion with the knuckle 1 (knuckle connecting portion).

A toe control inner bush 5a, which is a rubber bush formed into a substantially cylindrical shape, is held by the toe control inner connecting portion 51. In addition, a toe control inner swing shaft 5b is inserted through the toe control inner bush 5a. The toe control inner swing shaft 5b extends along a cylindrical central axis of the toe control inner bush 5a, and is supported by the vehicle body in a state of being inserted into the toe control inner bush 5a. In addition, the toe control inner connecting portion 51 is connected to the vehicle body via the toe control inner bush 5a and the toe control inner swing shaft 5b, so as to be swingable substantially with the toe control inner swing shaft 5b as the center of the swing.

The toe control outer connecting portion 52 is connected to a rear portion of the knuckle 1 via a toe control outer joint 5c which is a ball joint. In addition, the toe control outer connecting portion 52 is connected to the rear portion of the knuckle 1, so as to be swingable while regarding the ball center of the toe control outer joint 5c as the center of the swing.

Next, the configuration of the rear suspension structure of the vehicle 100 will be described in detail with reference to Figure 1 to Figure 3. Figure 3 is a side view of the rear suspension structure of the vehicle 100 viewed from the outer side in the vehicle width direction. Figure 3 shows a rear suspension structure of the vehicle 100 for a left rear wheel. In Figure 3, the tire T and the wheel 8 of the left rear wheel are removed.

Referring to Figure 1 to Figure 3, each of a center C1 of the upper outer connecting portion 23 which is a knuckle connecting portion of the upper link 2A (upper arm 2), a center C2 of the front lower outer connecting portion 32 which is a knuckle connecting portion of the front lower arm 3, a center C3 of the rear lower outer connecting portion 42 which is a knuckle connecting portion of the rear lower arm 4, and a center C4 of the toe control outer connecting portion 52 which is a knuckle connecting portion of the toe control arm 5 is positioned at an inner side in the vehicle width direction than an inner end 8a in the width direction of the wheel 8 of the rear wheel W.

Specifically, the center C1 of the upper outer connecting portion 23 is a point positioned at the ball center of the upper outer joint 2c. The center C2 of the front lower outer connecting portion 32 is positioned on the cylindrical central axis of the front lower outer bush 3c, and is a point positioned at the center in the width direction of the front lower outer connecting portion 32 in an extending direction of the front lower outer swing shaft 3d. The center C3 of the rear lower outer connecting portion 42 is positioned on the cylindrical central axis of the rear lower outer bush 4c, and is a point positioned at the center in the width direction of the rear lower outer connecting portion 42 in an extending direction of the rear lower outer swing shaft 4d. The center C4 of the toe control outer connecting portion 52 is a point positioned at the ball center of the toe control outer joint 5c.

In addition, the hub support portion 1a is arranged in the wheel 8 of the rear wheel W. In other words, the hub support portion 1a does not protrude to the inner side in the vehicle width direction from the inner end 8a of the wheel 8 in the vehicle width direction, in plan view viewed from above the vehicle, and is settled within a range of a wheel width of the wheel 8. In addition, the hub support portion 1a is fastened to the wheel 8 with the same axis as the wheel central axial line of the wheel 8, in the wheel 8.

Each knuckle arm (1b, 1c, 1d and 1e) extends from the hub support portion 1a and is integrally formed with the hub support portion 1a. The hub 7 includes an upper knuckle arm 1b, a front lower knuckle arm 1c, a rear lower knuckle arm 1d, and a toe control knuckle arm 1e, as knuckle arms.

The upper knuckle arm 1b extends from the hub support portion 1a and is connected to the upper outer connecting portion 23. Specifically, the upper knuckle arm 1b extends so as to protrude upward from a portion closer to the front side of the upper portion of the hub support portion 1a, and is connected to the upper outer connecting portion 23 via the upper outer joint 2c. A portion of the upper knuckle arm 1b on the upper arm 2 side is bent to an inner side in the vehicle width direction. The upper knuckle arm 1b is drawn to the inner side in the vehicle width direction so that the center C1 of the upper outer connecting portion 23 (ball center of upper outer joint 2c) is positioned at an inner side in the vehicle width direction than the inner end 8a in the width direction of the wheel 8 of the rear wheel W.

The front lower knuckle arm 1c extends from the hub support portion 1a and is connected to the front lower outer connecting portion 32. Specifically, the front lower knuckle arm 1c extends so as to protrude in a downward and inward direction from a portion closer to the front side of the lower portion of the hub support portion 1a, and is connected to the front lower outer connecting portion 32 via the front lower outer swing shaft 3d and the front lower outer bush 3c. The front lower knuckle arm 1c is formed substantially in a plate shape. The front lower knuckle arm 1c is drawn to the inner side in the vehicle width direction while being slightly inclined so that the center C2 of the front lower outer connecting portion 32 is positioned at an inner side in the vehicle width direction than the inner end 8a in the width direction of the wheel 8 of the rear wheel W.

The rear lower knuckle arm 1d extends from the hub support portion 1a and is connected to the rear lower outer connecting portion 42. Specifically, the rear lower knuckle arm 1d extends so as to protrude downward from a portion closer to the rear side of the lower portion of the hub support portion 1a, and is connected to the rear lower outer connecting portion 42 via the rear lower outer swing shaft 4d and the rear lower outer bush 4c. A portion of the rear lower knuckle arm 1d on the rear lower arm 4 side is bent to an inner side in the vehicle width direction. The rear lower knuckle arm 1d is drawn to the inner side in the vehicle width direction while being slightly inclined so that the center C3 of the rear lower outer connecting portion 42 is positioned at an inner side in the vehicle width direction than the inner end 8a in the width direction of the wheel 8 of the rear wheel W.

The toe control knuckle arm 1e extends from the hub support portion 1a and is connected to the toe control outer connecting portion 52. Specifically, the toe control knuckle arm 1e protrudes slightly rearward from the rear of the hub support portion 1a and is connected to the toe control outer connecting portion 52 via the toe control outer joint 5c. A portion of the toe control knuckle arm 1e on the toe control arm 5 side is largely bent inward in the vehicle width direction, and extends in a direction approaching the center line Xc in the vehicle width direction of the vehicle body as heading the rear side. The toe control knuckle arm 1e is drawn to the inner side in the vehicle width direction so that the center C4 of the toe control outer connecting portion 52 (ball center of toe control outer joint 5c) is positioned at an inner side in the vehicle width direction than the inner end 8a in the width direction of the wheel 8 of the rear wheel W.

Referring to Figure 1 and Figure 2, the front lower inner connecting portion 31 which is a connecting portion of the front lower arm 3 with the vehicle body is positioned at an outer side in the vehicle width direction than the rear lower inner connecting portion 41 which is a connecting portion of the rear lower arm 4 with the vehicle body. In addition, the front lower arm 3 is positioned in front of the rear lower arm 4. Accordingly, a lower link inner virtual swing axial line which is a virtual line passing through the center of the front lower inner connecting portion 31 and the center of the rear lower inner connecting portion 41 extends in a direction departing from a center line Xc in the vehicle width direction of the vehicle body as it heads to the front lower inner connecting portion 31 from the rear lower inner connecting portion 41, in plan view viewed from one side in the vehicle-up-down direction. The lower link 3A (front lower arm 3 and rear lower arm 4) can swing as a whole, in the vehicle-up-down direction, substantially with the lower link inner virtual swing axial line as the center.

In the present embodiment, the front lower inner connecting portion 31, the connecting portions of the upper link 2A with the vehicle body (front upper inner connecting portion 21 and rear upper inner connecting portion 22) and the rear lower inner connecting portion 41 are arranged so as to form a row in plan view viewed from one side in the vehicle-up-down direction. In other words, the inner connecting portions of the upper link 2A and the lower link 3A (2, 3 and 4) are arranged in the order of the front lower inner connecting portion 31, the front upper inner connecting portion 21, the rear upper inner connecting portion 22, and the rear lower inner connecting portion 41, from the front in the vehicle-front-rear direction; and as for the vehicle width direction, are arranged in the order of the front lower inner connecting portion 31, the front upper inner connecting portion 21, the rear upper inner connecting portion 22, and the rear lower inner connecting portion 41, from the outer side. Specifically, the connecting portions of the upper link 2A with the vehicle body (front upper inner connecting portion 21 and rear upper inner connecting portion 22) are arranged along the lower link inner virtual swing axial line, in plan view viewed from above the vehicle. Accordingly, the swing radius of the upper link 2A that is projected on the virtual plane perpendicular to the lower link inner virtual swing axial line is controlled to be substantially equal to the swing radius of the lower link 3A that is projected on the virtual plane perpendicular to the lower link inner virtual swing axial line.

Note that, in the front upper inner connecting portion 21 and the rear upper inner connecting portion 22 which are two connecting portions of the upper link 2A with the vehicle body, the upper inner swing shaft 2b of the front upper inner connecting portion 21 and the upper inner swing shaft 2b of the rear upper inner connecting portion 22 extend in parallel with each other and with the same axis. However, the respective inner swing shafts (3b, 2b and 4b) of the front lower inner connecting portion 31, the connecting portions of the upper link 2A with the vehicle body (front upper inner connecting portion 21 and rear upper inner connecting portion 22), and the rear lower inner connecting portion 41 do not extend in parallel to each other. The front lower inner swing shaft 3b takes a front-opening attitude in which the front end of itself is positioned at the outer side in the vehicle width direction with respect to the lower link inner virtual swing axial line. The rear lower inner swing shaft 4b takes a rear-opening attitude in which the rear end of itself is positioned at the outer side in the vehicle width direction with respect to the lower link inner virtual swing axial line. On the other hand, each of the upper inner swing shafts 2b takes a front-opening attitude that is parallel to the lower link inner virtual swing axial line. In other words, in the present embodiment, the front lower inner swing shaft 3b, the rear lower inner swing shaft 4b and the upper inner swing shaft 2b do not extend parallel to each other in the view from above the vehicle, and the angles of the swing shafts (3b, 4b and 2b) with respect to the lower link inner virtual swing axial line are different for each swing shaft. In addition, the front lower outer swing shaft 3d of the front lower arm 3 extends in parallel with the front lower inner swing shaft 3b, and the rear lower outer swing shaft 4d of the rear lower arm 4 extends in parallel with the rear lower inner swing shaft 4b.

In the present embodiment, the toe control arm 5 is positioned at a further rear side of the vehicle than the upper link 2A, the lower link 3A (the front lower arm 3 and the rear lower arm 4) and the drive shaft 6, in plan view viewed from above the vehicle, and extends without intersecting any of the upper link 2A, the lower link 3A, and the drive shaft 6. Accordingly, the toe control outer connecting portion 52 is positioned at an inner side in the vehicle width direction than the upper outer connecting portion 23, the front lower outer connecting portion 32 and the rear lower outer connecting portion 42, in plan view viewed from above the vehicle.

In addition, a toe control inner connecting portion 51 that is a connecting portion of the toe control arm 5 with the vehicle body is arranged so as to form a row together with the front lower inner connecting portion 31, the connecting portions of the upper link 2A with the vehicle body (front upper inner connecting portion 21 and rear upper inner connecting portion 22), and the rear lower inner connecting portion 41, in plan view viewed from one side in the vehicle-up-down direction. The toe control inner connecting portion 51 is arranged along the lower link inner virtual swing axial line in plan view viewed from above the vehicle, in rear of the rear lower inner connecting portion 41. Accordingly, also for the toe control arm 5, a swing radius of the toe control arm 5 that is projected on the virtual plane perpendicular to the lower link inner virtual swing axial line is controlled to be substantially equal to the swing radius of the lower link 3A that is projected on the virtual plane perpendicular to the lower link inner virtual swing axial line. As a result, the swing radii of the four link arms (2, 3, 4 and 5) are controlled so as to be substantially equal to each other, and a swing trajectory of the toe control arm 5 at the time of the extension and retraction of the suspension is brought close to a swing trajectory of the upper link 2A and a swing trajectory of the lower link 3A.

In the present embodiment, the upper outer connecting portion 23 is positioned at a further front side of the vehicle than the axial line of the drive shaft 6. In addition, an arm intersection point Z1 which is an intersection point between a central axial line L1 of the front lower arm 3 and a central axial line L2 of the rear lower arm 4 is positioned at a further rear side of the vehicle than the axial line of the drive shaft 6, and is also positioned closer to a center line W1 in a wheel width direction in the wheel 8 of the rear wheel W. In the present embodiment, the arm intersection point Z1 is positioned in the vicinity of the center line W1 in the wheel width direction, on an outer side in the wheel width direction than the center line W1 in the wheel width direction.

Here, in the rear suspension structure of the vehicle 100, a virtual kingpin axis K is defined which is a virtual line that passes through the center C1 of the upper outer connecting portion 23 and the arm intersection point Z1. The virtual kingpin axis K is a rotation center axis for a change in a toe angle of the rear wheel W. The rear suspension structure for the vehicle 100 does not have an actual kingpin for the rear wheel W; and the rear wheel W is structured so as to rotate while regarding the virtual kingpin axis K as the center, due to a lateral force or the like during running, and cause the change in the toe angle of the rear wheel W.

In the present embodiment, as previously described, the upper outer connecting portion 23 is positioned at a further front side of the vehicle than the axial line of the drive shaft 6, and an arm intersection point Z1 is positioned at a further rear side of the vehicle than the axial line of the drive shaft 6, and is also positioned closer to the center line W1 in the wheel width direction in the wheel 8 of the rear wheel W, in plan view viewed from above the vehicle; and thereby, the virtual kingpin axis K of the rear wheel W extends so as to be inclined closer to the front side of the vehicle as heading to the center C1 of the upper outer connecting portion 23 from the arm intersection point Z1, in plan view (see Figure 3) viewed from the outer side in the vehicle width direction, and passes through a position at a further rear side than the center in a radial direction of the wheel 8 (in other words, the wheel center or the axial line of the one end portion 6a of the drive shaft 6). In addition, the virtual kingpin axis K extends so as to approach the center line Xc in the vehicle width direction of the vehicle body as it heads to the center C1 of the upper outer connecting portion 23 from the arm intersection point Z1, in plan views (see Figure 1 and Figure 2) viewed from above the vehicle and from the rear side of the vehicle. In plan view (see Figure 2) viewed from the rear side of the vehicle, the virtual kingpin axis K passes through an inner position in the vehicle width direction than the center line W1 in the wheel width direction at a height position of the center in the radial direction of the wheel.

In the present embodiment, each of the rear lower outer bush 4c and the rear lower inner bush 4a has rigidity higher than rigidities of the front lower outer bush 3c and the front lower inner bush 3a. The bushes (3c and 3a) of the front lower arm 3 have relatively low rigidity, and the bushes (4c and 4a) of the rear lower arm 4 have relatively high rigidity. In other words, in the present embodiment, the bushes (3c and 3a) are held by the front lower outer connecting portion 32 and the front lower inner connecting portion 31, respectively, and bushes (4c and 4a) having rigidity higher than the rigidities of the bushes (3c and 3a) of the front lower outer connecting portion 32 and the front lower inner connecting portion 31 are held by the rear lower outer connecting portion 42 and the rear lower inner connecting portion 41, respectively.

In addition, for the vehicle body (bottom portion of vehicle body) to be connected by each of the link arms (2, 3, 4 and 5) requires a structural member (also referred to as skeleton member or suspension frame) which supports the inner bushes (2a, 3a, 4a and 5a) which are held by the vehicle body connecting portions (21, 22, 31, 41 and 51) of the respective link arms (2, 3, 4 and 5), and the inner swing shafts (2b, 3b, 4b and 5b). In this point, in the present embodiment, the toe control arm 5 is arranged in a further rear side of the vehicle than the drive shaft 6, and accordingly the structural member is also required to extend to a further rear side of the vehicle than the drive shaft 6. However, the bushes (3c and 3a) of the front lower arm 3 are bushes having lower rigidities, of which the rigidities are lower than the rigidities of the bushes (4c and 4a) of the rear lower arm 4, and accordingly, the front end portion of the structural member does not need to be formed to be so strong as the rear end portion of the structural member. Therefore, for example, in the case in which the structural member is formed into a frame shape (annular shape), the cross-sectional area of the front end portion of the structural member can be made smaller than the cross-sectional area of the rear end portion of the structural member. As a result, a structure advantageous in terms of securing a mounting space for the drive unit (power train) is provided which includes an electric motor that can be arranged around the front end portion of the structural member, and in addition, a structure can be provided that is efficient in terms of concentration of portions requiring reinforcement of the structure.

Next, effects of the rear suspension structure for the vehicle 100 according to the present embodiment will be described.

According to the rear suspension structure of the vehicle 100 of the present embodiment, the respective centers (C1, C2, C3 and C4) of the connecting portions (23, 32, 42 and 52) on the knuckle 1 side of the plurality of link arms (2, 3, 4 and 5) are positioned at an inner side in the vehicle width direction than the inner end 8a in the width direction of the wheel 8 of the rear wheel W; the hub support portion 1a of the knuckle 1 is arranged in the wheel 8; and the knuckle 1 includes the upper knuckle arm 1b that extends from the hub support portion 1a and is connected to the upper outer connecting portion 23, the front lower knuckle arm 1c that extends from the hub support portion 1a and is connected to the front lower outer connecting portion 32, the rear lower knuckle arm 1d that extends from the hub support portion 1a and is connected to the rear lower outer connecting portion 42, and the toe control knuckle arm 1e that extends from the hub support portion 1a and is connected to the toe control outer connecting portion 52. Thereby, the portions of the knuckle 1 connected to (combined with) each of the link arms (2, 3, 4 and 5) results in being positioned at the inner end 8a side in the width direction of the wheel 8 and outside the wheel 8. In addition, the layout of the connecting portions (23, 32, 42 and 52) of the respective link arms (2, 3, 4 and 5) on the knuckle 1 side becomes capable of being set without being affected by the wheel size of the rear wheel W. As a result, even when the wheel size of the rear wheel W, which is an object to be supported, is relatively small, the knuckle 1 and the vehicle body become easily connected via the plurality of link arms (2, 3, 4 and 5).

As described above, the rear suspension structure of the vehicle 100 according to the present embodiment is easily applied to a small vehicle in which the wheel size of the rear wheel W is small, and has a structure that can increase a flexibility in choosing in the wheel size of the rear wheel W of an object to be supported.

In addition, as described above, the layout of the connecting portions (23, 32, 42 and 52) of the respective link arms (2, 3, 4 and 5) on the knuckle 1 side becomes capable of being set without being affected by the wheel size of the rear wheel W, and accordingly, for example, the degree of freedom in setting of the position, direction, attitude and the like of the virtual kingpin axis K of the rear wheel W is enhanced, and the enhancement of the running stability can be easily achieved.

For example, in the present embodiment, in order to optimize the virtual kingpin axis K, the center C1 of the upper outer connecting portion 23 is positioned at a further front side of the vehicle than the axial line of the drive shaft 6: The drive shaft 6 is positioned between the front lower arm 3 and the rear lower arm 4, in plan view as viewed from above the vehicle; and the intersection point (arm intersection point Z1) between the central axial line L1 of the front lower arm 3 and the central axial line L2 of the rear lower arm 4 is positioned at a further rear side of the vehicle than the axial line of the drive shaft 6, and is also positioned closer to a center line W1 in a wheel width direction in the wheel 8, in plan view viewed from above the vehicle. Thereby, for example, at the time of turning by front wheel steering, the change in the toe angle in the toe-in direction of the rear wheel W around the virtual kingpin axis K due to the lateral force at the time of the turning can be achieved for the rear wheel W at the outer side of the turning, and the change in the toe angle in the toe-out direction can be achieved for the rear wheel W at the inner side of the turning. As a result, the running stability (turning stability) at the time of turning is enhanced.

In the present embodiment, the toe control arm 5 is positioned at a further rear side of the vehicle than the upper link 2A, the lower link 3A (the front lower arm 3 and the rear lower arm 4) and the drive shaft 6, in plan view viewed from above the vehicle, and extends without intersecting any of the links and shaft (2A, 3A and 6). Due to this arrangement of the toe control arm 5, it becomes possible to easily set the arm length of the toe control arm 5 to be long. In other words, the toe control arm 5 can be easily elongated. As a result, a swing angle of the toe control arm 5 in association with the extension and retraction of predetermined stroke lengths of the coil spring 9 and the shock absorber 10 becomes smaller than the swing angle in the case in which the arm length is relatively short. In addition, due to the reduced swing angle, the amount of rotation of the rear wheel W around the virtual kingpin axis K (the amount of change in the toe angle) in association with the extension and retraction of predetermined stroke lengths of the coil spring 9 and the shock absorber 10 is reduced to be smaller than that in the related art, and the running stability of the vehicle at the time of straight running or the like is enhanced.

In the present embodiment, each of the rear lower outer bush 4c and the rear lower inner bush 4a has rigidity greater than rigidities of the front lower outer bush 3c and the front lower inner bush 3a. Thereby, a rigidity difference which changes the toe angle of the rear wheel W at an outer side of the turning to the toe-in direction is intentionally provided between the front side bushes (3c and 3a) and the rear side bushes (4c and 4a) which straddle the drive shaft 6 in the front-rear direction in the lower link 3A. As a result, the lateral force of the rear wheel W at the time of turning increases, and the turning stability is more effectively stabilized. Note that, in the present embodiment, the toe control arm 5 is positioned at a further rear side of the vehicle than the upper link 2A, the lower link 3A, and the drive shaft 6, in plan view viewed from above the vehicle, and accordingly, an influence of the front lower outer bush 3c on the front side of the axle of the drive shaft 6 on the rigidity reduction is reduced. As a result, it is reduced that the toe control arm 5 obstructs the rotation of the rear wheel W at the outer side of the turning at the time of the turning in the toe-in direction by the previously described rigidity difference. Accordingly, both the improvement of the torsional rigidity around the ground contact point by the toe control arm 5 against the torsional moment around the ground contact point of the rear wheel W and the turning stability of the rear wheel W at the time of the turning can be achieved.

The description of the present embodiment is an example for describing the present invention, but it does not limit the invention as claimed in the claims. In addition, the configuration of each part of the present invention is not limited to the above embodiment, and various modifications can be made within the technical scope as claimed in the claims.

For example, the coil spring 9 and the shock absorber 10 are held by the rear lower arm 4, but they are not limited to this configuration, and they may also be held by the front lower arm 3.

In addition, the upper link 2A is not limited to the one upper arm 2 in which the connecting portion with the vehicle body branches into two, but may be divided into two arms in the front and rear as a whole, similarly to the lower link 3A. In this case, the upper link 2A includes a front upper arm and a rear upper arm; and an upper inner bush 2a and an upper inner swing shaft 2b are provided at a connecting portion of each upper arm with the vehicle body, an upper outer joint 2c is provided at a connecting portion of the front upper arm with a front side part of an upper portion of the knuckle 1, and an upper outer joint 2c is also provided at a connecting portion of the rear upper arm with a rear side part of the upper portion of the knuckle 1. In this case, the rear suspension structure for the vehicle 100 is a five-link multi-link type of rear suspension structure having five link arms for one rear wheel W.

### [Reference Signs List]

- 1: knuckle,
- 1a: hub support portion,
- 1b: upper knuckle arm,
- 1c: front lower knuckle arm
- 1d: rear lower knuckle arm,
- 1e: toe control knuckle arm
- 2A: upper link,
- 2: upper arm,
- 2a: upper inner bush,
- 2b: upper inner swing shaft,
- 2c: upper outer joint,
- 21: front upper inner connecting portion,
- 22: rear upper inner connecting portion,
- 23: upper outer connecting portion,
- 3A: lower link,
- 3: front lower arm,
- 3a: front lower inner bush,
- 3b: front lower inner swing shaft,
- 3c: front lower outer bush,
- 3d: front lower outer swing shaft,
- 31: front lower inner connecting portion,
- 32: front lower outer connecting portion,
- 4: rear lower arm,
- 4a: rear lower inner bush,
- 4b: rear lower inner swing shaft,
- 4c: rear lower outer bush,
- 4d: rear lower outer swing shaft,
- 41: rear lower inner connecting portion,
- 42: rear lower outer connecting portion,
- 5: toe control arm,
- 5a: toe control inner bush,
- 5b: toe control inner swing shaft,
- 5c: toe control outer joint,
- 51: toe control inner connecting portion,
- 52: toe control outer connecting portion,
- 6: drive shaft,
- 6a: one end portion,
- 7: hub,
- 8: wheel,
- 8a: inner end of wheel in vehicle width direction,
- 9: coil spring,
- 10: shock absorber
- 100: rear suspension structure for vehicle,
- C1: center of upper outer connecting portion,
- C2: center of front lower outer connecting portion
- C3: center of rear lower outer connecting portion,
- C4: center of toe control outer connecting portion
- L1: central axial line of front lower arm,
- L2: central axial line of rear lower arm,
- W: rear wheel,
- W1: center line in wheel width direction
- Xc: center line in vehicle width direction of vehicle body,
- Z1: arm intersection point (intersection point between central axial line of front lower arm and central axial line of rear lower arm),

## Claims

1. A vehicle having a rear suspension structure (100), the rear suspension structure comprising:
a knuckle (1) having a hub support portion (1a) that rotatably supports a hub (7) which is fixed to a wheel (8) of a rear wheel (W) of the vehicle;
an upper link (2A) that connects an upper portion of the knuckle (1) with a vehicle body of the vehicle;
a lower link (3A) that connects a lower portion of the knuckle (1) with the vehicle body, below the upper link (2A), also holds a lower end portion of a coil spring (9), and has a front lower arm (3), and a rear lower arm (4) which is arranged rearward of the front lower arm (3) in a vehicle-front-rear direction; and
a toe control arm (5) that connects the knuckle (1) with the vehicle body and also controls a change in a toe angle of the rear wheel (W), **characterized in that**
each of a center (C1) of an upper outer connecting portion (23) that is a knuckle connecting portion of the upper link (2A), a center (C2) of a front lower outer connecting portion (32) that is the knuckle connecting portion of the front lower arm (3), a center (C3) of a rear lower outer connecting portion (42) that is the knuckle connecting portion of the rear lower arm (4), and a center (C4) of a toe control outer connecting portion (52) that is the knuckle connecting portion of the toe control arm (5) is positioned at an inner side in the vehicle width direction than an inner end (8a) of the wheel (8) in the vehicle width direction,
the hub support portion (1a) is arranged in the wheel (8),
the knuckle (1) includes:
an upper knuckle arm (1b) that extends from the hub support portion (1a) and is connected to the upper outer connecting portion (23);
a front lower knuckle arm (1c) that extends from the hub support portion (1a) and is connected to the front lower outer connecting portion (32);
a rear lower knuckle arm (1d) that extends from the hub support portion (1a) and is connected to the rear lower outer connecting portion (42); and
a toe control knuckle arm (1e) that extends from the hub support portion (1a) and is connected to the toe control outer connecting portion (52),
the hub (7) is fastened to one end portion (6a) of a drive shaft (6) for driving the rear wheel (W),
the center (C1) of the upper outer connecting portion (23) is positioned at a further front side of the vehicle than an axial line of the drive shaft (6),
the drive shaft (6) is positioned between the front lower arm (3) and the rear lower arm (4), in plan view viewed from above the vehicle,
an intersection point (Z1) between a central axial line (L1) of the front lower arm (3) and a central axial line (L2) of the rear lower arm (4) is positioned at a further rear side of the vehicle than the axial line of the drive shaft (6), and is also positioned closer to a center line (W1) in a wheel width direction in the wheel (8), in plan view as viewed from above the vehicle,
a virtual kingpin axis (K) that is a virtual line that passes through the center (C1) of the upper outer connecting portion (23) and the intersection point (Z1) passes through a position at a further rear side than the axial line of the drive shaft (6), in plan view viewed from the outer side in the vehicle width direction, and
the toe control arm (5) is positioned at a further rear side of the vehicle than the upper link (2A), the lower link (3A) and the drive shaft (6), in plan view viewed from above the vehicle, and extends without intersecting any of the upper link (2A), the lower link (3A), and the drive shaft (6).

2. The vehicle according to claim 1, wherein
a bush (3c, 3a) is held by each of the front lower outer connecting portion (32) and a front lower inner connecting portion (31) that is a vehicle body connecting portion of the front lower arm (3), and
a bush (4c, 4a) having rigidity higher than rigidities of the bushes (3c, 3a) of the front lower outer connecting portion (32) and the front lower inner connecting portion (31) is held by each of the rear lower outer connecting portion (42) and a rear lower inner connecting portion which is a vehicle body connecting portion of the rear lower arm (4).

## Patentansprüche

1. Fahrzeug mit einer Hinterradaufhängungsstruktur (100), wobei die Hinterradaufhängungsstruktur umfasst:
einen Achsschenkel (1) mit einem Nabenträgerabschnitt (1a), der eine Nabe (7) drehbar trägt, die an einem Rad (8) eines Hinterrads (W) des Fahrzeugs befestigt ist;
einen oberen Lenker (2A), der einen oberen Abschnitt des Achsschenkels (1) mit einer Fahrzeugkarosserie des Fahrzeugs verbindet;
einen unteren Lenker (3A), der einen unteren Abschnitt des Achsschenkels (1) unterhalb des oberen Lenkers (2A) mit der Fahrzeugkarosserie verbindet, ferner einen unteren Endabschnitt einer Schraubenfeder (9) hält, und einen vorderen unteren Arm (3) und einen hinteren unteren Arm (4) aufweist, welcher in einer Fahrzeug-Längsrichtung hinter dem vorderen unteren Arm (3) angeordnet ist; und
einen Spurlenker (5), der den Achsschenkel (1) mit der Fahrzeugkarosserie verbindet und zudem eine Änderung eines Spurwinkels des Hinterrads (W) steuert, **dadurch gekennzeichnet, dass**
jeweils eine Mitte (C1) eines oberen äußeren Verbindungsabschnitts (23), welcher ein Achsschenkelverbindungsabschnitt des oberen Lenkers (2A) ist, eine Mitte (C2) eines vorderen unteren äußeren Verbindungsabschnitts (32), welcher der Achsschenkelverbindungsabschnitt des vorderen unteren Arms (3) ist, eine Mitte (C3) eines hinteren unteren äußeren Verbindungsabschnitts (42), welcher der Achsschenkelverbindungsabschnitt des hinteren unteren Arms (4) ist, und eine Mitte (C4) eines äußeren Spurkontroll-Verbindungsabschnitts (52), welcher der Achsschenkelverbindungsabschnitt des Spurlenkers (5) ist, an einer in Fahrzeugbreitenrichtung inneren Seite angeordnet ist als ein inneres Ende (8a) des Rads (8) in der Fahrzeugbreitenrichtung,
der Nabenträgerabschnitt (1a) in dem Rad (8) angeordnet ist,
der Achsschenkel (1) aufweist:
einen oberen Achsschenkelarm (1b), der sich von dem Nabenträgerabschnitt (1a) erstreckt und mit dem oberen äußeren Verbindungsabschnitt (23) verbunden ist;
einen vorderen unteren Achsschenkelarm (1c), der sich von dem Nabenträgerabschnitt (1a) erstreckt und mit dem vorderen unteren äußeren Verbindungsabschnitt (32) verbunden ist;
einen hinteren unteren Achsschenkelarm (1d), der sich von dem Nabenträgerabschnitt (1a) erstreckt und mit dem hinteren unteren äußeren Verbindungsabschnitt (42) verbunden ist; und
einen Spurkontroll-Achsschenkelarm (1e), der sich von dem Nabenträgerabschnitt (1a) erstreckt und mit dem äußeren Spurkontroll-Verbindungsabschnitt (52) verbunden ist,
die Nabe (7) an einem Endabschnitt (6a) einer Antriebswelle (6) zum Antreiben des Hinterrads (W) befestigt ist,
die Mitte (C1) des oberen äußeren Verbindungsabschnitts (23) an einer weiter vorne liegenden Seite des Fahrzeugs angeordnet ist als eine Axiallinie der Antriebswelle (6),
die Antriebswelle (6) in einer Draufsicht von oberhalb des Fahrzeugs aus betrachtet zwischen dem vorderen unteren Arm (3) und dem hinteren unteren Arm (4) angeordnet ist,
ein Schnittpunkt (Z1) zwischen einer zentralen Axiallinie (L1) des vorderen unteren Arms (3) und einer zentralen Axiallinie (L2) des hinteren unteren Arms (4) an einer weiter hinten liegenden Seite des Fahrzeugs angeordnet ist als die Axiallinie der Antriebswelle (6) und zudem näher an einer Mittellinie (W1) in einer Radbreitenrichtung im Rad (8) angeordnet ist, in einer Draufsicht von oberhalb des Fahrzeugs aus betrachtet,
eine virtuelle Kingpin-Achse (K), die eine virtuelle Linie ist, die durch die Mitte (C1) des oberen äußeren Verbindungsabschnitts (23) und den Schnittpunkt (Z1) verläuft, in einer Draufsicht von der äußeren Seite in Fahrzeugbreitenrichtung aus betrachtet durch eine Position verläuft, die weiter hinten liegt als die Axiallinie der Antriebswelle (6), und
der Spurlenker (5) in einer Draufsicht von oberhalb des Fahrzeugs aus betrachtet an einer weiter hinten liegenden Seite des Fahrzeugs angeordnet ist als der obere Lenker (2A), der untere Lenker (3A) und die Antriebswelle (6) und sich erstreckt, ohne den oberen Lenker (2A), den unteren Lenker (3A) oder die Antriebswelle (6) zu schneiden.

2. Fahrzeug nach Anspruch 1, wobei
eine Buchse (3c, 3a) jeweils von dem vorderen unteren äußeren Verbindungsabschnitt (32) und einem vorderen unteren inneren Verbindungsabschnitt (31), welcher ein Fahrzeugkarosserieverbindungsabschnitt des vorderen unteren Arms (3) ist, gehalten wird, und
eine Buchse (4c, 4a), die eine höhere Steifigkeit aufweist als die Steifigkeiten der Buchsen (3c, 3a) des vorderen unteren äußeren Verbindungsabschnitts (32) und des vorderen unteren inneren Verbindungsabschnitts (31), jeweils von dem hinteren unteren äußeren Verbindungsabschnitt (42) und einem hinteren unteren inneren Verbindungsabschnitt, welcher ein Fahrzeugkarosserieverbindungsabschnitt des hinteren unteren Arms (4) ist, gehalten wird.

## Revendications

1. Véhicule ayant une structure de suspension arrière (100), la structure de suspension arrière comprenant :
un porte-fusée (1) ayant une portion de support de moyeu (1a) qui supporte en rotation un moyeu (7) qui est fixé à une roue (8) d'une roue arrière (W) du véhicule ;
une biellette supérieure (2A) qui relie une portion supérieure du porte-fusée (1) à une carrosserie de véhicule du véhicule ;
une biellette inférieure (3A) qui relie une portion inférieure du porte-fusée (1) à la carrosserie de véhicule, au-dessous de la biellette supérieure (2A), supporte également une portion d'extrémité inférieure d'un ressort hélicoïdal (9), et possède un bras inférieur avant (3) et un bras inférieur arrière (4) qui est disposé à l'arrière du bras inférieur avant (3) dans une direction avant-arrière du véhicule ; et
un bras de contrôle de pincement (5) qui relie le porte-fusée (1) à la carrosserie de véhicule et contrôle également un changement d'un angle de pincement de la roue arrière (W), **caractérisé en ce que**
chacun parmi un centre (C1) d'une portion de liaison externe supérieure (23) qui est une portion de liaison de porte-fusée de la biellette supérieure (2A), un centre (C2) d'une portion de liaison externe inférieure avant (32) qui est la portion de liaison de porte-fusée du bras inférieur avant (3), un centre (C3) d'une portion de liaison externe inférieure arrière (42) qui est la portion de liaison de porte-fusée du bras inférieur arrière (4), et un centre (C4) d'une portion de liaison externe de contrôle de pincement (52) qui est la portion de liaison de porte-fusée du bras de contrôle de pincement (5) est positionné au niveau d'un côté interne dans la direction de la largeur du véhicule par rapport à une extrémité interne (8a) de la roue (8) dans la direction de la largeur du véhicule,
la portion de support de moyeu (1a) est disposée dans la roue (8),
le porte-fusée (1) comprend :
un bras de porte-fusée supérieur (1b) qui s'étend depuis la portion de support de moyeu (1a) et est relié à la portion de liaison externe supérieure (23) ;
un bras de porte-fusée inférieur avant (1c) qui s'étend depuis la portion de support de moyeu (1a) et est relié à la portion de liaison externe inférieure avant (32) ;
un bras de porte-fusée inférieur arrière (1d) qui s'étend depuis la portion de support de moyeu (1a) et est relié à la portion de liaison externe inférieure arrière (42) ; et
un bras de porte-fusée de contrôle de pincement (1e) qui s'étend depuis la portion de support de moyeu (1a) et est relié à la portion de liaison externe de contrôle de pincement (52),
le moyeu (7) est fixé à une portion d'extrémité (6a) d'un arbre de transmission (6) pour entraîner la roue arrière (W),
le centre (C1) de la portion de liaison externe supérieure (23) est positionné au niveau d'un côté plus à l'avant du véhicule qu'une ligne axiale de l'arbre de transmission (6),
l'arbre de transmission (6) est positionné entre le bras inférieur avant (3) et le bras inférieur arrière (4), en vue en plan depuis le dessus du véhicule,
un point d'intersection (Z1) entre une ligne axiale centrale (L1) du bras inférieur avant (3) et une ligne axiale centrale (L2) du bras inférieur arrière (4) est positionné au niveau d'un côté plus à l'arrière du véhicule que la ligne axiale de l'arbre de transmission (6), et est également positionné plus près d'une ligne centrale (W1) dans une direction de la largeur de roue dans la roue (8), en vue en plan depuis le dessus du véhicule,
un axe de pivot virtuel (K) qui est une ligne virtuelle qui passe par le centre (C1) de la portion de liaison externe supérieure (23) et le point d'intersection (Z1) passe par une position au niveau d'un côté plus à l'arrière que la ligne axiale de l'arbre de transmission (6), en vue en plan depuis le côté externe dans la direction de la largeur du véhicule, et
le bras de contrôle de pincement (5) est positionné au niveau d'un côté plus à l'arrière du véhicule que la biellette supérieure (2A), la biellette inférieure (3A) et l'arbre de transmission (6), en vue en plan depuis le dessus du véhicule, et s'étend sans couper aucun parmi la biellette supérieure (2A), la biellette inférieure (3A) et l'arbre de transmission (6).

2. Véhicule selon la revendication 1, dans lequel
une bague (3c, 3a) est supportée par chacune de la portion de liaison externe inférieure avant (32) et d'une portion de liaison interne inférieure avant (31) qui est une portion de liaison de carrosserie de véhicule du bras inférieur avant (3), et
une bague (4c, 4a) ayant une rigidité supérieure aux rigidités des bagues (3c, 3a) de la portion de liaison externe inférieure avant (32) et de la portion de liaison interne inférieure avant (31) est supportée par chacune de la portion de liaison externe inférieure arrière (42) et d'une portion de liaison interne inférieure arrière qui est une portion de liaison de carrosserie de véhicule du bras inférieur arrière (4).
